# EUROPEAN PATENT APPLICATION

(11) **EP 4 661 246 A1**
(43) Date of publication of application: **10.12.2025**
(21) Application number: 24749864.5
(22) Date of filing: 05.01.2024
(51) Int. Cl.: H02J 50/40, B60L 5/00, B60L 53/12, B60L 53/66, B60M 7/00, H02J 7/00, H02J 50/12, H02J 50/80, H02J 50/90

(54) **DYNAMIC NON-CONTACT POWER SUPPLY SYSTEM, POWER SUPPLY DEVICE, AND POWER RECEIVING DEVICE**

(30) Priority: 31.01.2023 JP 2023013399
(71) Applicant: TOYOTA JIDOSHA KABUSHIKI KAISHA, Toyota-shi Aichi 471-8571 (JP); DENSO CORPORATION, Kariya-shi, Aichi 448-8661 (JP)
(72) Inventor: HASHIMOTO, Toshiya, Toyota-shi, Aichi 471-8571 (JP); MAEMURA, Masato, Toyota-shi, Aichi 471-8571 (JP); TSUGE, Shogo, Toyota-shi, Aichi 471-8571 (JP); IKEMURA, Ryosuke, Toyota-shi, Aichi 471-8571 (JP); KANESAKI, Masaki, Kariya-shi, Aichi 448-8661 (JP); YAMAGUCHI, Nobuhisa, Kariya-shi, Aichi 448-8661 (JP); SUMIYA, Hayato, Kariya-shi, Aichi 448-8661 (JP); OBAYASHI, Kazuyoshi, Kariya-shi, Aichi 448-8661 (JP); TANI, Keisuke, Kariya-shi, Aichi 448-8661 (JP)
(74) Representative: Cabinet Beau de Loménie
(86) International application number: PCT/JP2024/000084
(87) International publication number: WO 2024/161908

(57) **Abstract**

An object is to clarify a method of resuming a road-side power feeding device after outage in the road-side power feeding device, and to realize both safety and efficiency in resumption of a power transfer process after the outage. An in-travel non-contact power feeding system which supplies power from a road-side power feeding device to a traveling vehicle equipped with a vehicle-side power reception device in a non-contact manner, in which the road-side power feeding device includes a first communication device capable of executing wide-area wireless communication with the vehicle-side power reception device, a second communication device capable of executing narrow-area wireless communication with the vehicle-side power reception device, and an abnormality determination unit that determines abnormality in the road-side power feeding device, and the road-side power feeding device is caused to execute a predetermined operation in a case where the abnormality determination unit determines generation of the abnormality.

## Description

### Field

The present disclosure relates to an in-travel non-contact power feeding system, a power feeding device, and a power reception device.

### Background

Patent Literature 1 discloses a technology of performing, in a case of detecting abnormality in a power reception device or a power transmission device, a procedure of temporarily stopping charging and resuming the charging after first time elapses after the detection of the abnormality.

### Citation List

### Patent Literature

Patent Literature 1: Japanese Patent Application Laid-open No. 2016-092978

### Summary

### Technical Problem

In a case of power feeding during traveling, in a road-side power feeding device that transmits power from the road side to a vehicle, in a case where outage is caused in in the road-side power feeding device due to generation of abnormality or the like, or in a case where power supply to the road-side power feeding device is cut off in response to the generation of the abnormality, a processing method of resuming from the outage is unclear, and there is room for improvement as to what kind of resumption processing should be executed after the outage in a case where the outage is caused or operating power is stopped.

The present disclosure has been made in view of the above problems, and an object thereof is to provide a non-contact power feeding system during traveling, a power feeding device, and a power reception device capable of achieving both safety and efficiency in resumption of a power transfer process after outage by clarifying a resumption method of a road-side power feeding device after the outage in the road-side power feeding device.

### Solution to Problem

To resolve the above problem and attain the object, an in-travel non-contact power feeding system according to the present disclosure supplies power from a road-side power feeding device to a traveling vehicle equipped with a vehicle-side power reception device in a non-contact manner. Further, the road-side power supply device includes a first communication device capable of executing wide-area wireless communication with the vehicle-side power reception device, a second communication device capable of executing narrow-area wireless communication with the vehicle-side power reception device, and an abnormality determination unit that determines abnormality in the road-side power feeding device, and the road-side power feeding device is made to execute a predetermined operation in a case where the abnormality determination unit determines generation of the abnormality.

A power feeding device according to the present disclosure supplies power to a traveling vehicle equipped with a vehicle-side power reception device in a non-contact manner, includes: a first communication device capable of executing wide-area wireless communication with the vehicle-side power reception device; a second communication device capable of executing narrow-area wireless communication with the vehicle-side power reception device; and an abnormality determination unit that determines abnormality. Further, a predetermined operation is executed in a case where the abnormality determination unit determines generation of the abnormality.

A power reception device according to the present disclosure can be mounted on a vehicle, and being configured to be able to receive power from a road-side power feeding device in a non-contact manner while the vehicle is traveling. Further, the road-side power feeding device includes a first communication device capable of executing wide-area wireless communication with the power reception device, a second communication device capable of executing narrow-area wireless communication with the power reception device, and an abnormality determination unit that determines abnormality in the road-side power feeding device, and is configured to execute a predetermined operation in a case where the abnormality determination unit determines generation of the abnormality. Advantageous Effects of Invention

The in-travel non-contact power feeding system, the power feeding device, and the power reception device according to the present disclosure can achieve both safety and efficiency in resuming the power transfer process after outage by clarifying the resumption method of the road side power feeding device after the outage in the road-side power feeding device.

### Brief Description of Drawings

FIG. 1 is a schematic diagram illustrating a wireless power transfer system according to an embodiment.
FIG. 2 is a view illustrating an overall configuration of the wireless power transfer system.
FIG. 3 is a schematic diagram for describing wide-area wireless communication in a wireless power transfer system.
FIG. 4 is a block diagram for describing a functional configuration of a power transmission ECU.
FIG. 5 is a block diagram for describing a functional configuration of a vehicle ECU.
FIG. 6 is a view for describing a power transfer process.
FIG. 7 is a sequence diagram illustrating a case where communication using the wide-area wireless communication is performed between a vehicle and a supply device.
FIG. 8 is a sequence diagram illustrating an operation after power feeding from the supply device to the vehicle during traveling is terminated.
FIG. 9 is a flowchart illustrating an example of control of detecting abnormality in the wireless power transfer system.
FIG. 10 is a flowchart for describing an example of a monitoring method for detecting the abnormality.
FIG. 11 is a flowchart for describing predetermined processing.

### Description of Embodiments

Hereinafter, an embodiment of an in-travel non-contact power feeding system according to the present disclosure will be described. Note that the present disclosure is not limited to the embodiment described in the following. First, a wireless power transfer system in the embodiment of the present disclosure will be specifically described.

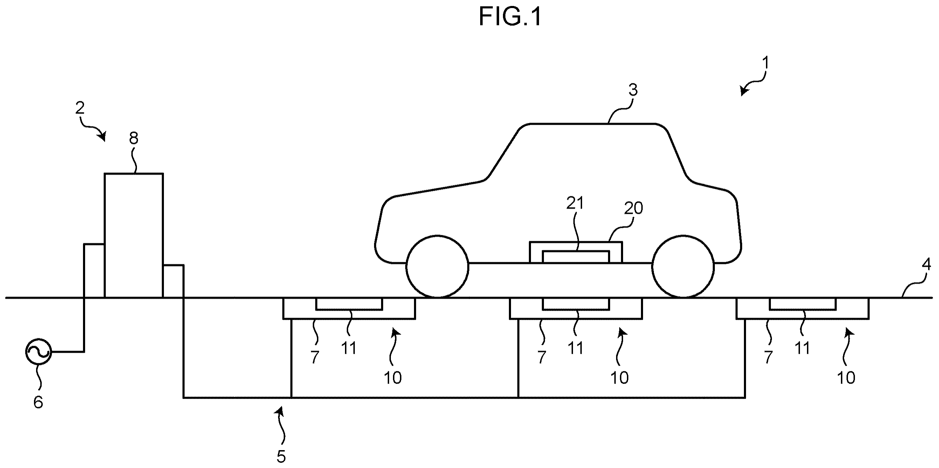

FIG. 1 is a schematic diagram illustrating the wireless power transfer system according to the embodiment. A wireless power transfer system 1 is an in-travel non-contact power feeding system which system includes supply equipment 2 and a vehicle 3 and supplies power from the supply equipment 2 to the traveling vehicle 3. The supply equipment 2 is equipment that supplies power to the traveling vehicle 3 in a non-contact manner. The vehicle 3 is an electric vehicle that can be charged with power supplied from an external power supply, and is, for example, a battery electric vehicle (BEV), a plug-in hybrid electric vehicle (PHEV), or the like.

The wireless power transfer system 1 performs a wireless power transfer from the supply equipment 2 to the vehicle 3 by magnetic field resonance coupling (magnetic field resonance). The wireless power transfer system 1 transfers power from the supply equipment 2 to the vehicle 3 traveling on a road 4 in the non-contact manner. That is, the wireless power transfer system 1 transfers power by a magnetic field resonance system, and realizes power feeding to the vehicle 3 during traveling by using the magnetic field resonance coupling (magnetic field resonance). The wireless power transfer system 1 can be expressed as a dynamic wireless power transfer (D-WPT) system or a magnetic field dynamic wireless power transfer (MF-D-WPT) system.

The supply equipment 2 includes a supply device 5 and an AC power supply 6 that supplies power to the supply device 5. The supply device 5 transfers the power supplied from the AC power supply 6 to the vehicle 3 in the non-contact manner. The AC power supply 6 is, for example, a commercial power supply. The supply device 5 includes a power transmission device 10 having a primary coil 11.

The supply device 5 as a road-side power feeding device includes a segment 7 including a primary coil 11, and a management device 8 that manages the segment 7. The segment 7 is embedded in a lane of the road 4. The management device 8 is installed beside the road 4. The segment 7 is electrically connected to the management device 8. The management device 8 is electrically connected to the AC power supply 6, and supplies the power of the AC power supply 6 to the segment 7. The segment 7 is electrically connected to the AC power supply 6 via the management device 8. A plurality of the segments 7 can be arranged along the lane of the road 4. For example, as illustrated in FIG. 1, the supply device 5 includes three segments 7 installed side by side along the lane in the road 4, and one management device 8 to which the three segments 7 are connected. The segments 7 have a function of transferring the power from the supply device 5 to the vehicle 3 in the non-contact manner. The management device 8 has a function of controlling wireless power transfer in the segments 7.

The vehicle 3 includes a power reception device 20 having a secondary coil 21. The power reception device 20 as a part of a vehicle-side power reception device is provided at a bottom of a vehicle body of the vehicle 3. When the vehicle 3 travels on the road 4 on which the primary coil 11 is installed, the primary coil 11 on a ground side and the secondary coil 21 on a vehicle side face each other in a vertical direction. The wireless power transfer system 1 transfers the power from the primary coil 11 of the power transmission device 10 to the secondary coil 21 of the power reception device 20 in the non-contact manner while the vehicle 3 is traveling on the road 4.

Traveling in this description means a state in which the vehicle 3 is located on the road 4 for traveling. Traveling also includes a state in which the vehicle 3 is temporarily stopped on the road 4. For example, a state in which the vehicle 3 is stopped on the road 4 to wait for a traffic light to change is also included in traveling. On the other hand, even when the vehicle 3 is located on the road 4, for example, in a case where the vehicle 3 is parked/stopped, the state is not included in traveling.

In addition, in this description, a lane in which the primary coils 11 (segments 7) are embedded may be referred to as a D-WPT lane, and a place which is a partial section of the road 4 and in which the wireless power transfer by the supply device 5 can be performed may be referred to as a D-WPT charging site. In the D-WPT lane and the D-WPT charging site, the plurality of primary coils 11 (plurality of segments 7) is installed side by side in a traveling direction of the vehicle 3 over a predetermined section of the road 4.

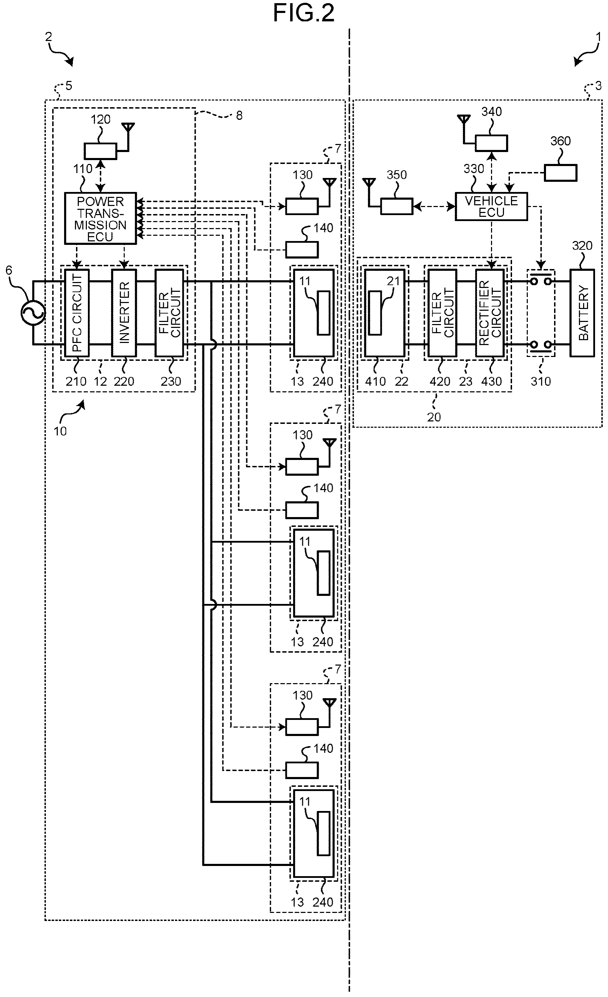

FIG. 2 is a view illustrating an overall configuration of the wireless power transfer system 1. In the supply equipment 2, the supply device 5 and the AC power supply 6 are electrically connected. In the supply device 5, the segments 7 and the management device 8 are electrically connected.

The supply device 5 includes a configuration provided in the management device 8 and a configuration provided in each of the segments 7. The supply device 5 includes the power transmission device 10, a power transmission electronic control unit (ECU) 110, a first communication device 120, a second communication device 130, and a foreign object detection device 140.

The power transmission device 10 includes an electric circuit connected to the AC power supply 6. The power transmission device 10 includes a power factor collection (PFC) circuit 210, an inverter (INV) 220, a filter circuit 230, and a transmission-side resonant circuit 240.

The PFC circuit 210 improves a power factor of AC power input from the AC power supply 6, converts the AC power into DC power, and performs an output thereof to the inverter 220. The PFC circuit 210 includes an AC/DC converter. The PFC circuit 210 is electrically connected to the AC power supply 6.

The inverter 220 converts the DC power input from the PFC circuit 210 into the AC power. Each switching element of the inverter 220 includes an insulated gate bipolar transistor (IGBT), a metal-oxide semiconductor field effect transistor, or the like, and performs a switching operation according to a control signal from the power transmission ECU 110. For example, an operating frequency of the inverter 220 is 85 kHz. The inverter 220 outputs the converted AC power to the filter circuit 230.

The filter circuit 230 removes noise included in an alternating current input from the inverter 220, and supplies the AC power from which the noise is removed to the transmission-side resonant circuit 240. The filter circuit 230 is an LC filter in which a coil and a capacitor are combined. For example, the filter circuit 230 includes a T-type filter in which two coils and one capacitor are arranged in a T shape. The PFC circuit 210, the inverter 220, and the filter circuit 230 are included in a power conversion unit 12 of the power transmission device 10.

The transmission-side resonant circuit 240 is a power transmission unit that transmits the AC power supplied from the filter circuit 230 to the power reception device 20 in the non-contact manner. When the AC power is supplied from the filter circuit 230 to the transmission-side resonant circuit 240, current flows through the primary coil 11, and a magnetic field for power transmission is generated.

The transmission-side resonant circuit 240 includes the primary coil 11 and a resonant capacitor. The primary coil 11 is a power transmission coil. The resonant capacitor is connected in series to one end of the primary coil 11, and adjusts a resonance frequency of the transmission-side resonant circuit. The resonance frequency is 10 kHz to 100 GHz, and is preferably 85 kHz. For example, the power transmission device 10 is configured in such a manner that the resonance frequency of the transmission-side resonant circuit 240 and the operating frequency of the inverter 220 match. The transmission-side resonant circuit 240 is included in a primary device 13 of the power transmission device 10.

The power transmission device 10 includes the power conversion unit 12 and the primary device 13. The power conversion unit 12 includes the PFC circuit 210, the inverter 220, and the filter circuit 230. The primary device 13 includes the transmission-side resonant circuit 240. The power transmission device 10 has a configuration in which the power conversion unit 12 is provided in the management device 8 and the primary device 13 is provided in each of the segments 7.

In the supply device 5, the power conversion unit 12 of the power transmission device 10, the power transmission ECU 110, and the first communication device 120 are provided in the management device 8, and the primary device 13 of the power transmission device 10, the second communication device 130, and the foreign object detection device 140 are provided in each of the segments 7.

The power transmission ECU 110 is an electronic control device that controls the supply device 5. The power transmission ECU 110 includes a processor and a memory. The processor includes a central processing unit (CPU), a digital signal processor (DSP), a field-programmable gate array (FPGA), and the like. The memory is a main storage device, and includes a random access memory (RAM), a read only memory (ROM), and the like. The power transmission ECU 110 loads a program stored in the storage unit into a work area of the memory (main storage device) and executes the program, controls each configuration unit and the like through the execution of the program, and realizes a function matching a predetermined purpose. The storage unit includes recording media such as an erasable programmable ROM (EPROM), a hard disk drive (HDD), and a removable medium. Examples of the removable medium include a universal serial bus (USB) memory, and disc recording media such as a compact disc (CD), a digital versatile disc (DVD), and a Blu-ray (registered trademark) disc (BD). The storage unit can store an operating system (OS), various programs, various tables, various databases, and the like. Signals from various sensors are input to the power transmission ECU 110. A signal from the foreign object detection device 140 is input to the power transmission ECU 110. Then, the power transmission ECU 110 executes various kinds of control on the basis of the signals input from the various sensors.

For example, the power transmission ECU 110 executes power control of adjusting power for power transmission. In this power control, the power transmission ECU 110 controls the power transmission device 10. The power transmission ECU 110 outputs a control signal to the power conversion unit 12 in order to control the power supplied from the power conversion unit 12 to the primary device 13. The power transmission ECU 110 adjusts power for power transmission by controlling a switching element included in the PFC circuit 210, and adjusts the power for power transmission by controlling the switching element included in the inverter 220.

Furthermore, the power transmission ECU 110 executes communication control of controlling communication with the vehicle 3. In the communication control, the power transmission ECU 110 controls the first communication device 120 and the second communication device 130.

The first communication device 120 is a ground-side communication device that performs wide-area wireless communication. The first communication device 120 performs wireless communication with the vehicle 3, which is before approaching the D-WPT lane, among the vehicles 3 traveling on the road 4. A state before approaching the D-WPT lane means that the vehicle 3 is at a position where narrow-area wireless communication with the supply device 5 cannot be performed.

The wide-area wireless communication is communication with a communication distance of 10 meters to 10 kilometers. The wide-area wireless communication is communication having a longer communication distance than the narrow-area wireless communication. As the wide-area wireless communication, various kinds of wireless communication having a long communication distance can be used. For example, communication conforming to communication standards such as 4G, LTE, 5G, and WiMAX formulated by 3GPP (registered trademark) and IEEE is used for the wide-area wireless communication. In the wireless power transfer system 1, vehicle information associated with vehicle identification information (vehicle ID) is transmitted from the vehicle 3 to the supply device 5 by utilization of the wide-area wireless communication.

The second communication device 130 is a ground-side communication device that performs the narrow-area wireless communication. The second communication device 130 performs the wireless communication with the vehicle 3, which approaches or enters the D-WPT lane, among the vehicles 3 traveling on the road 4. A state of approaching the D-WPT lane means that the vehicle 3 is at a position where the narrow-area wireless communication with the supply device 5 can be performed.

The narrow-area wireless communication is communication with a communication distance of less than 10 meters. The narrow-area wireless communication is communication having a shorter communication distance than the wide-area wireless communication. As the narrow-area wireless communication, various short-range wireless communication having a short communication distance can be used. For example, communication conforming to any communication standard formulated by IEEE, ISO, IEC, or the like is used for the narrow-area wireless communication. As an example, Wi-Fi (registered trademark), Bluetooth (registered trademark), ZigBee (registered trademark), and the like are used for the narrow-area wireless communication. Alternatively, as a technology for performing the narrow-area wireless communication, radio frequency identification (RFID), dedicated short range communication (DSRC), or the like may be used. In the wireless power transfer system 1, the vehicle identification information and the like are transmitted from the vehicle 3 to the supply device 5 by utilization of the narrow-area wireless communication.

The foreign object detection device 140 detects a metal foreign object, a living object, or the like present above the primary coils 11. The foreign object detection device 140 includes, for example, a sensor coil, an imaging device, and the like installed on the ground. The foreign object detection device 140 exerts foreign object detection (FOD) and living object protection (LOP) in the wireless power transfer system 1.

In the supply device 5, the configuration of the power transmission device 10 is divided into the segments 7 and the management device 8, and the three segments 7 are connected to the one management device 8. The power transmission device 10 is configured in such a manner that one inverter supplies power to three transmission-side resonant circuits 240. In addition, in the supply device 5, a signal from each of the segments 7 is input to the management device 8. Signals from the second communication device 130 and the foreign object detection device 140 provided in a first segment are input to the power transmission ECU 110. Similarly, signals from the second communication device 130 and the foreign object detection device 140 provided in a second segment are input to the power transmission ECU 110. Signals from the second communication device 130 and the foreign object detection device 140 provided in a third segment are input to the power transmission ECU 110. The power transmission ECU 110 can grasp a state of each of the segments 7 on the basis of the signals input from each of the segments 7.

The vehicle 3 includes the power reception device 20, a charging relay 310, a battery 320, a vehicle ECU 330, a third communication device 340, a fourth communication device 350, and a global positioning system (GPS) receiver 360.

The power reception device 20 supplies the power received from the power transmission device 10 to the battery 320. The power reception device 20 is electrically connected to the battery 320 via the charging relay 310. The power reception device 20 includes a reception-side resonant circuit 410, a filter circuit 420, and a rectifier circuit 430.

The reception-side resonant circuit 410 is a power reception unit that receives the power transferred from the power transmission device 10 in the non-contact manner. The reception-side resonant circuit 410 includes a reception-side resonant circuit including the secondary coil 21 and a resonant capacitor. The secondary coil 21 is a power reception coil that receives power transferred from the primary coil 11 in the non-contact manner. The resonant capacitor is connected in series to one end of the secondary coil 21, and adjusts a resonance frequency of the reception-side resonant circuit. The resonance frequency of the reception-side resonant circuit 410 is determined to match the resonance frequency of the transmission-side resonant circuit 240.

The resonance frequency of the reception-side resonant circuit 410 is the same as the resonance frequency of the transmission-side resonant circuit 240. Thus, when a magnetic field by the transmission-side resonant circuit 240 is generated in a state in which the reception-side resonant circuit 410 faces the transmission-side resonant circuit 240, vibration of the magnetic field is transmitted to the reception-side resonant circuit 410. The primary coil 11 and the secondary coil 21 are brought into a resonance state. When an induced current flows through the secondary coil 21 by electromagnetic induction, induced electromotive force is generated in the reception-side resonant circuit 410. In such a manner, the power transferred from the transmission-side resonant circuit 240 in the non-contact manner is received by the reception-side resonant circuit 410. Then, the reception-side resonant circuit 410 supplies the power received from the transmission-side resonant circuit 240 to the filter circuit 420. The reception-side resonant circuit 410 is included in a secondary device 22 of the power reception device 20.

The filter circuit 420 removes noise included in an alternating current input from the reception-side resonant circuit 410, and outputs AC power from which the noise is removed to the rectifier circuit 430. The filter circuit 420 is an LC filter in which a coil and a capacitor are combined. For example, the filter circuit 420 includes a T-type filter in which two coils and one capacitor are arranged in a T-shape.

The rectifier circuit 430 converts the AC power input from the filter circuit 420 into DC power and performs an output thereof to the battery 320. The rectifier circuit 430 includes, for example, a full-bridge circuit in which four diodes are full-bridge connected as rectifier elements. A switching element is connected in parallel to each diode of the rectifier circuit 430. Each switching element of the rectifier circuit 430 includes an IGBT, and performs a switching operation according to a control signal from the vehicle ECU 330. The rectifier circuit 430 supplies the converted DC power to the battery 320. The filter circuit 420 and the rectifier circuit 430 are included in a power conversion unit 23 of the power reception device 20.

The power reception device 20 includes the secondary device 22 and the power conversion unit 23. The secondary device 22 includes the reception-side resonant circuit 410. The power conversion unit 23 includes the filter circuit 420 and the rectifier circuit 430.

The charging relay 310 is provided between the rectifier circuit 430 and the battery 320. An open/closed state of the charging relay 310 is controlled by the vehicle ECU 330. When the battery 320 is charged by the power transmission device 10, the charging relay 310 is controlled to be in the closed state. In a case where the charging relay 310 is in the closed state, the rectifier circuit 430 and the battery 320 are connected to be energizable. In a case where the charging relay 310 is in the open state, the rectifier circuit 430 and the battery 320 are disconnected from each other in a non-energizable manner. For example, in a case where the charging relay 310 is in the open state, the vehicle 3 does not request the power feeding.

The battery 320 is a DC power supply that can be charged, and includes, for example, a lithium-ion battery, a nickel-metal hydride battery, or the like. The battery 320 stores the power supplied from the power transmission device 10 to the power reception device 20. In addition, the battery 320 can supply the power to a motor for traveling of the vehicle 3. The battery 320 is electrically connected to the motor for traveling via a power control unit (PCU). The PCU is a power conversion device that converts the DC power of the battery 320 into AC power, and supplies the AC power to the motor for traveling. Each switching element of the PCU includes an IGBT, and performs a switching operation according to a control signal from the vehicle ECU 330.

The vehicle ECU 330 is an electronic control device that controls the vehicle 3. The vehicle ECU 330 has a hardware configuration similar to that of the power transmission ECU 110. Signals from various sensors mounted on the vehicle 3 are input to the vehicle ECU 330. Furthermore, a positioning signal received by a GPS receiver 360 is input to the vehicle ECU 330. The vehicle ECU 330 can acquire current position information of the vehicle 3 from the GPS receiver 360. Then, the vehicle ECU 330 executes various kinds of control on the basis of signals input from the various sensors.

For example, the vehicle ECU 330 executes non-contact charging control of transferring the power from the primary coil 11 to the secondary coil 21 in the non-contact manner, and storing the power received by the secondary coil 21 into the battery 320. In the non-contact charging control, the vehicle ECU 330 controls the rectifier circuit 430, the charging relay 310, the third communication device 340, and the fourth communication device 350. The non-contact charging control includes power control of controlling charging power and communication control of controlling communication with the supply device 5. In the power control, the vehicle ECU 330 controls the switching element included in the rectifier circuit 430, and adjusts power (charging power) supplied from the power reception device 20 to the battery 320. In the communication control, the vehicle ECU 330 controls the third communication device 340 and the fourth communication device 350.

The third communication device 340 is a vehicle-side communication device that performs wide-area wireless communication. The third communication device 340 performs wireless communication with the first communication device 120 of the supply device 5 in a state before the vehicle 3 traveling on the road 4 approaches the D-WPT lane. The wide-area wireless communication is bidirectional wireless communication. Communication between the first communication device 120 and the third communication device 340 is performed by high-speed wireless communication.

The fourth communication device 350 is a vehicle-side communication device that performs narrow-area wireless communication. The fourth communication device 350 performs wireless communication with the second communication device 130 of the supply device 5 in a state in which the vehicle 3 has approached or entered the D-WPT lane. The narrow-area wireless communication is unidirectional wireless signaling. The unidirectional wireless signaling is point to point signaling (P2PS). P2PS is used to notify the vehicle identification information from the vehicle 3 to the supply device 5 in each of activities of pairing, alignment check, magnetic coupling check, a termination of power transfer, and the termination of power transfer. In addition, P2PS can be used as a means of the alignment check in a lateral direction. The lateral direction is a width direction of the lane and is a width direction of the vehicle 3.

The GPS receiver 360 detects a current position of the vehicle 3 on the basis of positioning information acquired from a plurality of positioning satellites. The current position information of the vehicle 3 which information is detected by the GPS receiver 360 is transmitted to the vehicle ECU 330.

Note that in the supply device 5, the filter circuit 230 may be included in the management device 8 instead of the segment 7. That is, the filter circuit 230 may be installed beside the road 4. In this case, the power conversion unit 12 includes the PFC circuit 210, the inverter 220, and the filter circuit 230, and the primary device 13 includes the transmission-side resonant circuit 240.

In addition, the filter circuit 230 may be individually provided for the primary coil 11, or may be collectively provided for a plurality of the primary coils 11.

Furthermore, the filter circuit 230 is not limited to the T-type filter, and may be, for example, a band-pass filter in which a coil and a capacitor are connected in series. The same applies to the filter circuit 420 of the vehicle 3.

Furthermore, in the power transmission device 10, a changeover switch of switching the primary coil 11 to be energized may be provided in each of the primary devices 13 when the inverter 220 is connected to the plurality of primary coils 11. The changeover switch may be provided in the management device 8 beside the road 4 or may be provided near the primary coil 11.

Furthermore, the transmission-side resonant circuit 240 is not limited to the configuration in which primary coil 11 and the resonant capacitor are connected in series. The primary coil 11 and the resonant capacitor may be connected in parallel, or may be connected by a combination of parallel connection and series connection. In short, the transmission-side resonant circuit 240 only needs to be configured in such a manner that the resonance frequency of the transmission-side resonant circuit 240 matches the operating frequency of the inverter 220, and a connection relationship among the components is not specifically limited. The same applies to the reception-side resonant circuit 410 of the vehicle 3.

The operating frequency of the inverter 220 is not limited to 85 kHz, and may be a frequency around 85 kHz. In short, the operating frequency of the inverter 220 may be a predetermined frequency band including 85 kHz.

In addition, the power transmission device 10 may have a configuration in which a plurality of the inverters 220 is connected to an output-side power line (DC power line) of the PFC circuit 210.

In addition, the foreign object detection device 140 may be provided not only on the ground side but also on a side of the vehicle 3. For example, in a case where the foreign object detection device on the side of the vehicle 3 detects a foreign object, a living object, or the like present above the primary coil 11, a power supply request can be stopped until the vehicle 3 passes through the primary coil 11.

In addition, in the wireless power transfer system 1, the information transmitted from the vehicle 3 to the supply device 5 by utilization of the narrow-area wireless communication includes a power feeding request, a fed power request value, and the like in addition to the vehicle identification information. The power feeding request is information indicating that a power transfer from the primary coil 11 is requested. The fed power request value is a requested value of an amount of the power transmitted from the supply device 5 to the vehicle 3. The vehicle ECU 330 can calculate the fed power request value on the basis of a state of charge (SOC) of the battery 320.

In addition, the wireless power transfer system 1 is not limited to a method of feeding power from the ground to the vehicle 3, and can also realize a method of feeding power from the vehicle 3 to the ground. In this case, the rectifier circuit 430 can be replaced with an inverter and realize rectification at the time of power supply and power reception.

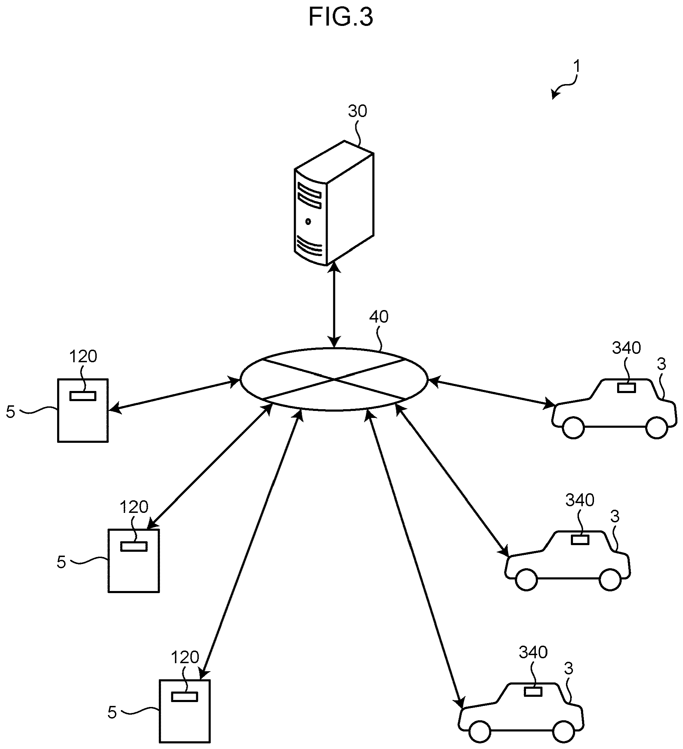

FIG. 3 is a schematic diagram for describing the wide-area wireless communication in the wireless power transfer system 1.

In the wireless power transfer system 1, the vehicle 3 can communicate with a server 30, and the supply device 5 can communicate with the server 30. The server 30 is connected to a network 40 and can communicate with a plurality of the vehicles 3 and a plurality of the supply devices 5 via the network 40. The network 40 includes a wide area network (WAN) that is a public communication network such as the Internet, a telephone communication network of a mobile phone, or the like.

The vehicle 3 is connected to the network 40 by the wide-area wireless communication using the third communication device 340. The vehicle 3 transmits information to the server 30 and receives information from the server 30.

The supply device 5 is connected to the network 40 by the wide-area wireless communication using the first communication device 120. The supply device 5 transmits information to the server 30 and receives information from the server 30.

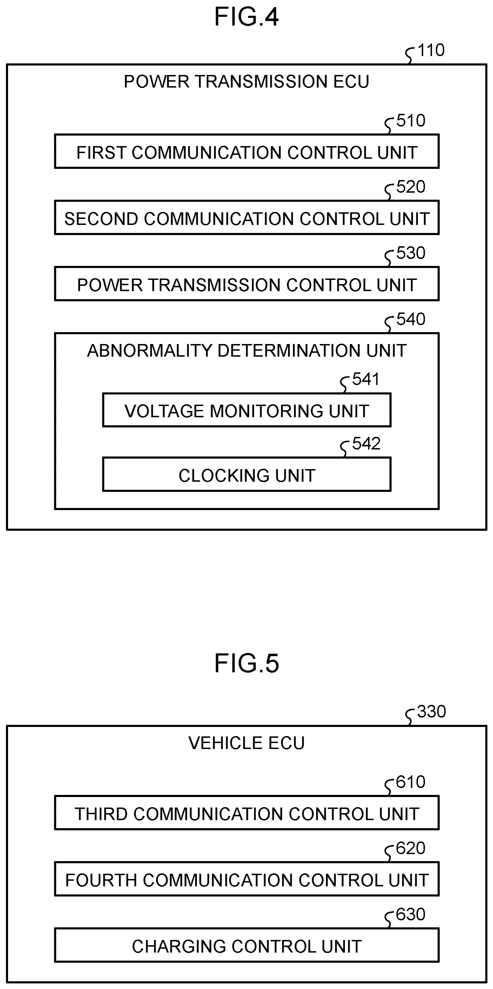

FIG. 4 is a block diagram illustrating a functional configuration of the power transmission ECU 110. The power transmission ECU 110 includes a first communication control unit 510, a second communication control unit 520, a power transmission control unit 530, and an abnormality determination unit 540. In addition, the abnormality determination unit 540 includes a voltage monitoring unit 541 and a clocking unit 542 that is a time measurement unit.

The first communication control unit 510 executes first communication control of controlling the first communication device 120. The first communication control is to control the wide-area wireless communication on a side of the supply device 5, and controls communication of the supply device 5 using the first communication device 120. That is, the first communication control controls communication of the management device 8 of the supply device 5. In the first communication control, the communication between the supply device 5 and the network 40 is controlled and communication between the supply device 5 and the server 30 via the network 40 is controlled. The first communication control unit 510 is a supply equipment communication controller (SECC).

The second communication control unit 520 executes second communication control of controlling the second communication device 130. The second communication control is to control the narrow-area wireless communication on a side of the supply device 5, and controls communication of the supply device 5 using the second communication device 130. That is, communication of the segment 7 of the supply device 5 is controlled in the second communication control. Communication between the supply device 5 and the vehicle 3 as communication not via the network 40 is controlled in the second communication control. The second communication control unit 520 is a primary device communication controller (PDCC).

The power transmission control unit 530 executes power transmission control of controlling the power transmission device 10. The power transmission control is to control power for power transmission, and controls the power conversion unit 12 of the power transmission device 10. The power transmission control unit 530 executes power control for controlling the PFC circuit 210 and the inverter 220.

The abnormality determination unit 540 determines abnormality generated in the supply device 5. The abnormality determination unit 540 receives environmental information such as disaster or an accident on the basis of the information received from the server 30. The abnormality determination unit 540 can determine generation of the abnormality from information of generation of disaster or an accident on the basis of the received environmental information that is an abnormality determination element. In at least one of the wide-area wireless communication or the narrow-area wireless communication, the abnormality determination unit 540 can determine generation of the abnormality in at least one of a case where there is no response to communication, a case where at least number of times of communication trials is equal to or larger than predetermined number of times, and a case where an elapsed time of no response in a communication trial is equal to or longer than predetermined time.

The voltage monitoring unit 541 functions as a voltage measuring unit that monitors voltage of each component in the supply device 5. The abnormality determination unit 540 determines generation of the abnormality on the basis of the voltage in each component which voltage is monitored by the voltage monitoring unit 541. The clocking unit 542 as the time measurement unit starts time measurement from a time point at which the voltage monitoring unit 541 detects a decrease in voltage of at least one of the plurality of components included in the supply device 5. The abnormality determination unit 540 executes abnormality determination on the basis of an abnormality determination element that the elapsed time is equal to or longer than the predetermined time.

FIG. 5 is a block diagram illustrating a functional configuration of the vehicle ECU 330. The vehicle ECU 330 includes a third communication control unit 610, a fourth communication control unit 620, and a charging control unit 630.

The third communication control unit 610 executes third communication control of controlling the third communication device 340. The third communication control is to control the wide-area wireless communication on the side of the vehicle 3, and controls communication of the vehicle 3 using the third communication device 340. In the third communication control, communication between the vehicle 3 and the network 40 is controlled, and communication between the vehicle 3 and the server 30 via the network 40 is also controlled. The third communication control unit 610 is an EV communication controller (EVCC).

The fourth communication control unit 620 executes fourth communication control of controlling the fourth communication device 350. The fourth communication control is to control the narrow-area wireless communication on the side of the vehicle 3, and controls communication of the vehicle 3 using the fourth communication device 350. In the fourth communication control, communication between the vehicle 3 and the supply device 5 as communication not via the network 40 is controlled. The fourth communication control unit 620 is a secondary device communication controller (SDCC).

The charging control unit 630 executes charging control of controlling the power reception device 20 and the charging relay 310. The charging control includes power control of controlling reception power in the power reception device 20, and relay control of controlling a connection state between the secondary device 22 and the battery 320. The charging control unit 630 executes power control of controlling the rectifier circuit 430. The charging control unit 630 executes relay control of switching the open/closed state of the charging relay 310.

In the wireless power transfer system 1 configured in such a manner, the wireless power transfer from the supply device 5 to the vehicle 3 is performed in a state in which the wireless communication is established between the vehicle 3 and the supply device 5. In a state in which the vehicle 3 and the supply device 5 are paired by the wireless communication, the power is transferred from the primary coil 11 on the ground side to the secondary coil 21 on the side of the vehicle in the non-contact manner. Then, in the vehicle 3, charging control of supplying the power received by the secondary coil 21 to the battery 320 is performed.

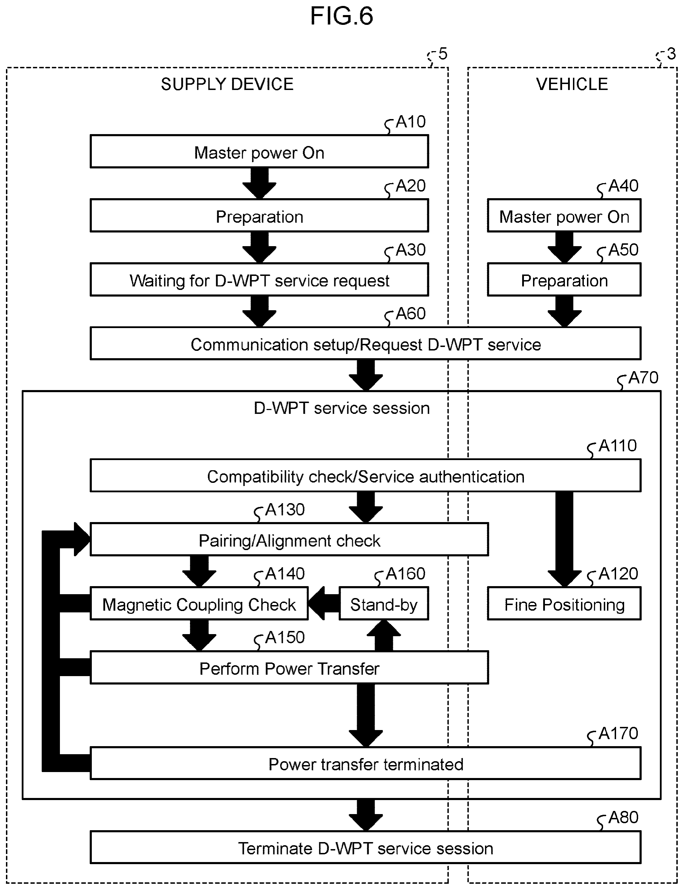

Next, a power transfer process (D-WPT process) will be described with reference to FIG. 6. The power transfer process is a process structured as a chain of a plurality of activities and derived from states and corresponding transitions.

FIG. 6 is a view for describing the power transfer process. In FIG. 6, basic activities for describing the power transfer process are illustrated. Thick arrows illustrated in FIG. 6 represent transition lines. A state of the wireless power transfer system 1 in the power transfer process is represented by the activities included in the power transfer process.

The activities included in the power transfer process include a power transfer service session (D-WPT service session A70) that is an activity in a stage of performing the power transfer, an activity in a stage before performing the power transfer, and an activity in a stage after performing the power transfer. Furthermore, the activities can be described with operation subjects being divided according to presence or absence of communication between the supply device 5 and the vehicle 3. The activities are divided into what represents a state of only the side of the supply device 5 without communication, what represents a state of only the side of the vehicle 3 without communication, and what represents a state of both the supply device 5 and the vehicle 3 with communication.

As illustrated in FIG. 6, the activities include a master power supply being in an ON state (Master power On) A10, preparation (Preparation) A20, waiting for a request from the vehicle 3 (Waiting for D-WPT service request) A30, the master power supply being in the ON state (Master power On) A40, preparation (Preparation) A50, setting communication (Communication setup) and requesting for a D-WPT service (Request D-WPT service) A60, a D-WPT service session (D-WPT service session) A70, and terminating the D-WPT service session (Terminate D-WPT service session) A80.

The preparation A20 is a preparation state of the supply device 5. In the preparation A20, the supply device 5 activates a circuit and confirms safety without communicating with the vehicle 3. When the master power supply is brought into the ON state A10, the supply device 5 transitions to the state of the preparation A20. Then, in a case where the supply device 5 activates the circuit and can confirm safety in the preparation A20, the state transitions to waiting for a request from the vehicle 3 A30. On the other hand, in a case where there is a problem in the supply device 5, the supply device 5 notifies the vehicle 3 of information indicating that the wireless power transfer system 1 cannot be used (unavailability notification) by the wide-area wireless communication. The first communication device 120 transmits the unavailability notification to the vehicle 3.

The preparation A50 is a preparation state of the vehicle 3. In the preparation A50, the vehicle 3 activates a circuit and confirms safety without communicating with the supply device 5. When the master power supply is brought into the ON state A40, the vehicle 3 transitions to the state of the preparation A50. Then, in a case where the vehicle 3 activates the circuit and can confirm safety in the preparation A50, the state transitions to setting communication and requesting for the D-WPT service A60. On the other hand, in a case where there is a problem in the vehicle 3, the vehicle 3 does not start the wide-area wireless communication and does not perform the subsequent sequence in the D-WPT process.

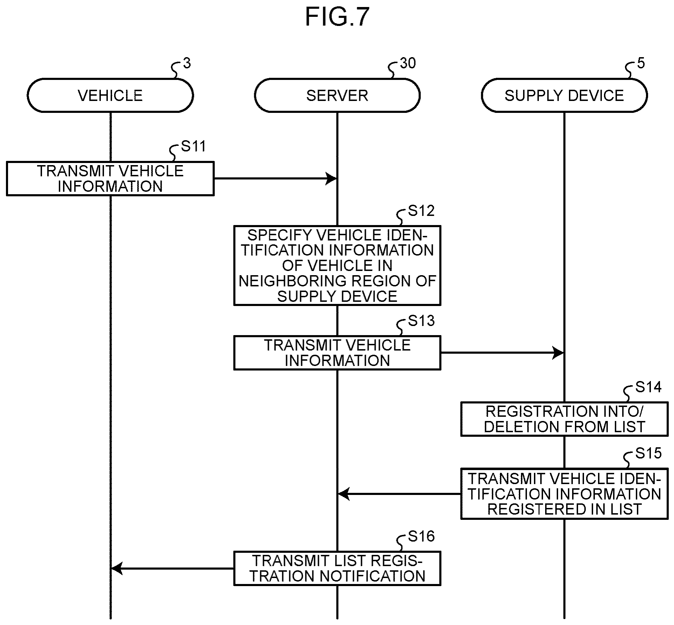

Setting communication and requesting for the D-WPT service A60 is started by the vehicle ECU 330. In setting communication and requesting for the D-WPT service A60, the vehicle ECU 330 starts the wide-area wireless communication. First, when the vehicle 3 transitions from the preparation A50 to setting communication and requesting for the D-WPT service A60, the third communication device 340 transmits a request signal for the D-WPT service. The third communication device 340 performs the wireless communication with the first communication device 120 corresponding to the D-WPT lane that the vehicle 3 is scheduled to enter or has entered. The first communication device 120 to be a communication target is selected on the basis of a relative positional relationship between a current position of the vehicle 3 and a position of the D-WPT lane. On the side of the supply device 5, when the first communication device 120 receives the request signal for the D-WPT service in the state of waiting for the request from the vehicle 3 A30, the state transitions to setting communication and requesting for the D-WPT service A60. Various kinds of information of the wide-area wireless communication and the P2PS communication are linked by utilization of the vehicle identification information. A processing sequence of setting communication and requesting for the D-WPT service A60 is illustrated in FIG. 7.

FIG. 7 is a sequence diagram illustrating a case where communication using the wide-area wireless communication is performed between the vehicle 3 and the supply device 5. The vehicle 3 transmits the vehicle information to the server 30 (Step S11). In Step S11, the third communication device 340 of the vehicle 3 transmits the vehicle information to the server 30. The vehicle information includes the vehicle identification information, various parameters of the power reception device 20, current position information of the vehicle 3, and requested power. The vehicle ECU 330 calculates the requested power on the basis of the SOC of the battery 320. In Step S11, the vehicle ECU 330 causes the third communication device 340 to transmit the vehicle information every predetermined time. The predetermined time is set according to a distance from the current position of the vehicle 3 to a starting point of the D-WPT lane. As the distance from the vehicle 3 to the starting point of the D-WPT lane becomes shorter, an interval of the predetermined time becomes shorter.

When receiving the vehicle information from the vehicle 3, the server 30 specifies the vehicle identification information of the vehicle 3 located in a neighboring region of the supply device 5 on the basis of the current position information of the vehicle 3 which current position information is included in the vehicle information (Step S12). In Step S12, the server 30 specifies the vehicle 3 located in a predetermined neighboring region from the supply device 5 on the basis of the current position information of the vehicle 3 and position information of the supply device 5. The neighboring region is set to, for example, a region within 500 meters.

When specifying the vehicle identification information of the vehicle 3, the server 30 transmits the vehicle information to the supply device 5 (Step S13). In Step S13, a transmission device of the server 30 transmits the vehicle information to the supply device 5.

When receiving the vehicle information from the server 30, the supply device 5 registers/deletes the vehicle identification information in/from an identification information list (Step S14). In Step S14, the power transmission ECU 110 registers/deletes the vehicle identification information in/from the identification information list in such a manner that the vehicle identification information associated with the vehicle information is registered in the identification information list without excess or deficiency.

After registering/deleting the vehicle identification information in/from the identification information list, the supply device 5 transmits the vehicle identification information registered in the identification information list to the server 30 (Step S15). In Step S15, the first communication device 120 of the supply device 5 transmits the vehicle identification information to the server 30.

Then, when receiving the vehicle identification information from the supply device 5, the server 30 transmits list registration notification to the vehicle 3 corresponding to the vehicle identification information registered in the identification information list (Step S16). In Step S16, a communication device of the server 30 transmits the list registration notification to the vehicle 3. The list registration notification is notification indicating that the vehicle identification information is registered in the identification information list, and includes identification information of the supply device 5 and the position information of the supply device 5.

As described above, when the vehicle 3 starts the wide-area wireless communication and both the supply device 5 and the vehicle 3 are in the state of setting communication and requesting for the D-WPT service A60, the communication setting by the wide-area wireless communication is successful. With this successful communication setting, the state transitions to the D-WPT service session A70.

FIG. 6 is referred to again. In the D-WPT service session A70, power is transferred from the transmission-side resonant circuit 240 of the supply device 5 to the reception-side resonant circuit 410 of the vehicle 3 in the non-contact manner in a state in which communication connection is established between the supply device 5 and the vehicle 3. The D-WPT service session A70 starts with the success of the communication setting and terminates by a termination of the communication. When the communication terminates in the state of the D-WPT service session A70, the state transitions to the termination of the D-WPT service session A80.

At the termination of the D-WPT service session A80, the vehicle 3 terminates the wide-area wireless communication with the supply device 5. The vehicle 3 and the supply device 5 can receive a trigger for terminating the D-WPT service session A70. Then, the vehicle ECU 330 prevents the D-WPT from being started for the secondary device 22 and the vehicle 3 until the third communication device 340 receives next notification (request signal for the D-WPT service).

Here, detailed activities of the D-WPT service session A70 will be described.

The D-WPT service session A70 includes a compatibility check (Compatibility check) and service authentication (Service authentication) A110, fine positioning (Fine Positioning) A120, pairing (Pairing) and an alignment check (Alignment check) A130, a magnetic coupling check (Magnetic Coupling Check) A140, execution of a power transfer (Perform Power Transfer) A150, standing by (Stand-by) A160, and a termination of the power transfer (Power transfer terminated) A170.

The compatibility check and service authentication A110 will be described. After the success of the communication setting, the vehicle ECU 330 and the power transmission ECU 110 confirm that the primary device 13 and the secondary device 22 are compatible. The compatibility check is performed on the side of the supply device 5 on the basis of the information associated with the vehicle identification information acquired by the communication. Check items include a minimum ground clearance of the secondary device 22, a shape type of the secondary device 22, circuit topology of the secondary device 22, a self-resonant frequency of the secondary device 22, the number of the secondary coils 21, and the like.

In the compatibility check and service authentication A110, first, the vehicle 3 transmits compatibility information of the power reception device 20 from the third communication device 340 to the supply device 5. The first communication device 120 of the supply device 5 receives the compatibility information of the power reception device 20 from the vehicle 3. Then, the first communication device 120 of the supply device 5 transmits compatibility information of the power transmission device 10 to the vehicle 3. The third communication device 340 of the vehicle 3 receives the compatibility information of the power transmission device 10 from the supply device 5.

Elements of the compatibility information transmitted by the vehicle 3 to the supply device 5 include the vehicle identification information, WPT power classes, an air gap class, WPT operating frequencies, a WPT frequency adjustment, a WPT type, WPT circuit topology, a fine positioning method, a pairing method, an alignment method, presence/absence information of a power adjustment function, and the like.

Elements of the compatibility information transmitted by the supply device 5 to the vehicle 3 include supply device identification information, the WPT power class, the air gap class, the WPT operating frequencies, the WPT frequency adjustment, the WPT type, the WPT circuit topology, the fine positioning method, the pairing method, the alignment method, presence/absence information of the power adjustment function, and the like.

Each element name will be described in detail. Each element of the compatibility information transmitted from the vehicle 3 to the supply device 5 will be described, and a description of what overlaps with the compatibility information transmitted from the vehicle 3 to the supply device 5 in the compatibility information transmitted from the supply device 5 to the vehicle 3 will be omitted.

The air gap class is information indicating an air gap class in which the secondary device 22 can receive power. The WPT power class is information indicating a power class in which the secondary device 22 can receive the power. The WPT operating frequencies are information indicating frequencies of reception power received by the secondary device 22. The WPT frequency adjustment is information indicating whether the operating frequency can be adjusted. The WPT type is information indicating the shape type of the secondary device 22, and indicates a coil shape of the secondary coil 21. Examples of the WTP type include a circle and a solenoid. The WPT circuit topology is information indicating a connection structure between the secondary coil 21 and the resonant capacitor. As the WTP circuit topology, there are series and a parallel. The fine positioning method is information indicating how to perform alignment when performing the alignment. The pairing method is a method in which the vehicle 3 performs pairing of specifying the supply device 5. The alignment method indicates a method of relatively confirming positions of the secondary device 22 and the primary device 13 before starting the power transmission.

The fine positioning A120 will be described. The vehicle 3 performs the fine positioning A120 prior to the pairing and alignment check A130 or in parallel with these activities. When determining that the vehicle 3 approaches or enters the region where the supply device 5 is installed (WPT lane), the vehicle ECU 330 starts the fine positioning A120.

The vehicle ECU 330 guides the vehicle 3 and aligns the primary device 13 and the secondary device 22 within a range that establishes sufficient magnetic coupling for the wireless power transfer.

The fine positioning A120 is basically performed on the side of the vehicle 3 manually or automatically. The fine positioning A120 can cooperate with an automated driving assistance system (ADAS). The communication termination is the termination of the D-WPT service session A80.

Then, the activity of the fine positioning A120 continues until the vehicle 3 leaves the D-WPT charging site or the state changes to the termination of the communication, and can be executed on the basis of alignment information transmitted from the supply device 5 to the vehicle 3 by the wide-area wireless communication.

The pairing and alignment check A130 will be described. Here, the pairing and the alignment check will be separately described.

The pairing will be described. A P2PS interface that performs the narrow-area wireless communication ensures that the primary device 13 and the secondary device 22 are uniquely paired. A process of the pairing state is as follows.

First, the vehicle ECU 330 recognizes that the vehicle 3 approaches or enters the D-WPT lane. For example, the vehicle ECU 330 has map information including the D-WPT lane, and performs comparison with position information of the own vehicle which information is acquired by the GPS receiver 360 and recognizes the approach or entry according to a straight line distance or the like therebetween. The vehicle 3 transmits, to the server 30, which D-WPT lane the vehicle 3 approaches by the wide-area wireless communication. In short, the third communication device 340 notifies a cloud of a signal indicating that the vehicle 3 approaches any of the D-WPT lanes. Furthermore, in a case where the vehicle ECU 330 recognizes the approach or entry of the vehicle 3 to the D-WPT lane, the fourth communication device 350 starts transmitting a modulation signal at certain intervals for pairing of the primary device 13 and the secondary device 22.

In addition, the supply device 5 may recognize that the vehicle 3 approaches or enters the D-WPT lane by using the information acquired from the server 30 by the wide-area wireless communication. The server 30 allocates the vehicle identification information of the approaching vehicle 3 in each D-WPT lane to the supply device 5 corresponding to the lane. Since the supply device 5 only needs to refer to the vehicle identification information the number of pieces of which is reduced by the server 30, authentication processing can be performed in a short time. In a case where the supply device 5 recognizes that the vehicle 3 is approaching the D-WPT lane, the second communication device 130 enters a stand-by mode. In the stand-by mode, waiting for reception of the modulation signal from the fourth communication device 350 of the vehicle 3 is performed. The modulation signal includes the vehicle identification information.

When the second communication device 130 receives the modulation signal from the vehicle 3, the supply device 5 compares the vehicle identification information received by the narrow-area wireless communication with the vehicle identification information in the identification information list acquired as a result of the wide-area wireless communication with a plurality of the vehicles 3 heading for the D-WPT lane. By this comparison, the supply device 5 identifies the vehicle 3.

When recognizing that the vehicle 3 is outside the D-WPT lane, the vehicle ECU 330 stops transmitting the modulation signal from the fourth communication device 350. The vehicle ECU 330 can determine whether the D-WPT lane is passed through on the basis of the map information and the position information of the own vehicle.

In a case of determining that the vehicle 3 is not traveling on the D-WPT lane or determining that the vehicle 3 is not approaching the D-WPT lane, the supply device 5 stops waiting for the modulation signal from the fourth communication device 350.

The pairing is executed on the primary device 13 until the vehicle 3 goes out of the D-WPT charging site or the state changes to the termination of the communication. When the pairing is completed, the state transitions to the alignment check.

The alignment check will be described. The alignment check is to confirm that a distance between the primary device 13 and the secondary device 22 in the lateral direction is within an acceptable range. The alignment check is performed by utilization of the narrow-area wireless communication (P2PS).

The alignment check is continuously executed on the basis of the P2PS until the vehicle 3 leaves the D-WPT charging site or the state changes to the termination of the communication. The result of the alignment check can be transmitted from the first communication device 120 to the third communication device 340 by the wide-area wireless communication.

The magnetic coupling check A140 will be described. In the magnetic coupling check A140, the supply device 5 confirms a magnetic coupling state and confirms that the secondary device 22 is within an acceptable range. When the magnetic coupling check A140 terminates, the state transitions to the execution of the power transfer A150.

The execution of the power transfer A150 will be described. In this state, the supply device 5 performs the power transfer to the power reception device 20. The power transmission device 10 and the power reception device 20 need to have capability of controlling transfer power (transmission power and reception power) for usefulness of the MF-D-WPT and protection of the power reception device 20 and the battery 320. The larger power transfer helps to increase a traveling distance without static wireless charging and conductive charging of the power reception device 20. However, capacity of the battery 320 varies depending on a vehicle type of the vehicle 3, and an operating power demand may fluctuate rapidly. Examples of this rapid fluctuation include sudden regenerative braking. In a case where the regenerative braking is performed while the vehicle is traveling in the D-WPT lane, the regenerative braking is prioritized. Thus, the reception power from the power reception device 20 is supplied to the battery 320 in addition to regenerative power. In this case, it is necessary to adjust the transfer power by the power reception device 20 in order to protect the battery 320 from overcharge.

In this state, communication is not newly started between the supply device 5 and the power reception device 20 despite the necessity of the power control. This is because the communication may damage a response and accuracy in the power control due to its instability and latency. Thus, the supply device 5 and the power reception device 20 perform the power transfer and control thereof on the basis of known information up to this state.

The supply device 5 increases the transfer power of the magnetic coupling check in response to a power request transmitted from the third communication device 340 by utilization of the wide-area wireless communication in advance. The supply device 5 keeps current and voltage fluctuations within the range and tries to maximize the power transferred during the transition.

The power reception device 20 basically receives transmission power from the power transmission device 10 without any control. However, the power reception device 20 starts the control in a case where the transmission power exceeds or is about to exceed a limit such as rated power of the battery 320 which power fluctuates according to a charged state or the operating power demand of the vehicle 3. In addition, the power control in the vehicle ECU 330 is also required to cope with malfunction in the wide-area wireless communication. This malfunction leads to a contradiction between a power control target in the primary device 13 and the request from the third communication device 340, and a sudden failure of the power reception device 20 or the battery 320 during the power transfer. The power reception device 20 controls the power transferred under a power request rate notified by the first communication device 120.

The power request is determined on the basis of compatibility check information such as the WPT circuit topology, geometry, ground clearance, and electromagnetic compatibility (EMC) of the vehicle 3 and the primary device 13. The magnetic field varies depending on these specifications, and it is necessary to transfer power within a range satisfying the EMC.

The power control in the power transmission ECU 110 and the power reception device 20 may interfere with each other. Specifically, in a case where the supply device 5 tries to realize a power request larger than the latest power limit in the power reception device 20 by the wide-area wireless communication, there is a possibility of the interference. An example of this is rapid regenerative control with a relatively small battery 320 in the vehicle 3. When possible, it is desirable that the supply device 5 can detect a mismatch between a power supply control target and the limit and adjust the power transfer in order to eliminate the mismatch.

For example, when the power transfer is interrupted for a short period while the secondary device 22 is still on the primary device 13, such as in a case where a foreign object on the primary device 13 is detected by the foreign object detection device 14, or in a case where the magnetic coupling is reduced due to misalignment of the secondary device 22, the state transitions to the stand-by A160. Note that in a case where the foreign object detection device is provided in the vehicle 3, the foreign object may be detected on the side of the vehicle 3.

When the secondary device 22 passes over the primary device 13, the state transitions to the termination of the power transfer A170. In this case, since the magnetic coupling between the two devices is weakened, the transferred power is reduced. Since the supply device 5 can detect that the magnetic coupling is weakened by monitoring the transfer power, the supply device 5 basically determines the state transition to the termination of the power transfer A170 and then starts lowering the voltage to stop the power transfer.

The stand-by A160 will be described. In this state, when the power transfer is interrupted for a short time for some reason and both the vehicle 3 and the supply device 5 are ready for the D-WPT, the state returns to the execution of the power transfer A150. In a case where there is a possibility that the power transfer is interrupted, the state becomes the stand-by A160.

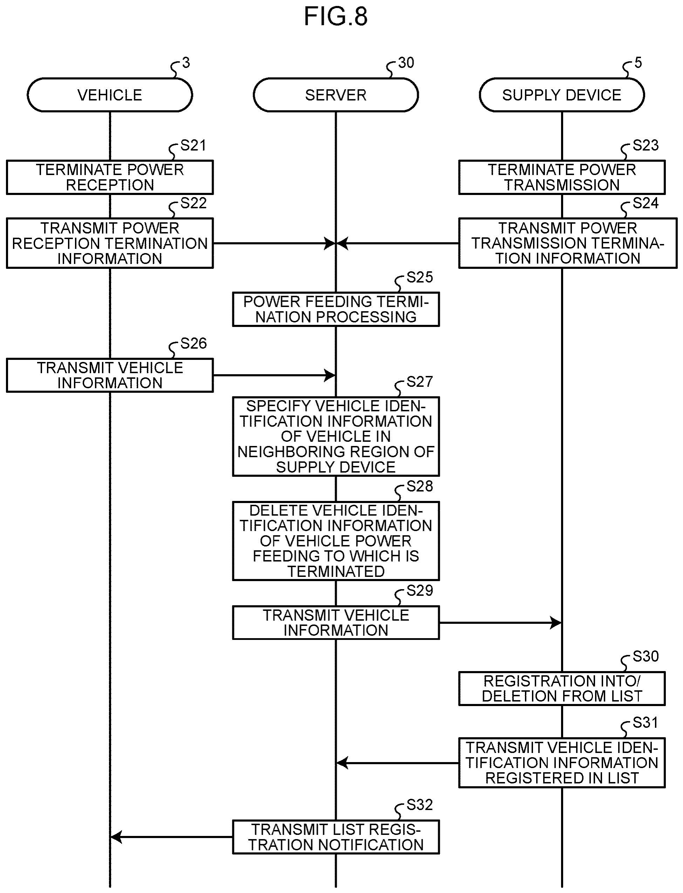

The termination of the power transfer A170 will be described. In this state, the supply device 5 reduces the transferred power to zero, and holds or uploads power transfer result data such as total transfer power, power transfer efficiency, and a failure history. Each piece of data is tagged with the vehicle identification information. Finally, the supply device 5 deletes the vehicle identification information of the vehicle 3 that has passed through the D-WPT lane. Thus, the supply device 5 can prepare for the pairing and the power transfer to be performed on another vehicle thereafter. A processing sequence of the termination of the power transfer A170 is illustrated in FIG. 8.

FIG. 8 is a sequence diagram illustrating an operation after the power feeding from the supply device 5 to the vehicle 3 during traveling is terminated. When the power reception from the supply device 5 terminates in the power reception device 20 of the vehicle 3 (Step S21), the vehicle 3 transmits power reception termination information to the server 30 (Step S22). In Step S22, the power reception termination information is transmitted from the third communication device 340 of the vehicle 3. The power reception termination information includes, for example, the vehicle identification information of the vehicle 3, the reception power from the supply device 5, the power reception efficiency, and an abnormality detection result as information related to the power reception from the supply device 5.

When the processing of Step S21 is performed, the supply device 5 terminates the power transmission to the vehicle 3 (Step S23). The processing in Step S21 and the processing in Step S23 may or may not be performed simultaneously. When the processing of Step S23 is performed, the supply device 5 transmits power transmission termination information to the server 30 (Step S24). In Step S24, the power transmission termination information is transmitted from the first communication device 120 of the supply device 5.

When receiving the power reception termination information from the vehicle 3 and receiving the power transmission termination information from the supply device 5, the server 30 performs power feeding termination processing of terminating the power feeding from the supply device 5 to the vehicle 3 (Step S25). In the power feeding termination processing, processing of calculating a power supply amount from the supply device 5 to the vehicle 3 and processing of charging the user of the vehicle 3 on the basis of the calculated power supply amount are performed on the basis of the power reception termination information and the power transmission termination information.

Furthermore, the vehicle 3 transmits the vehicle information to the server 30 regardless of the power feeding termination processing (Step S26). In Step S26, the vehicle information is transmitted from the third communication device 340 of the vehicle 3.

When receiving the vehicle information from the vehicle 3 after performing the power feeding termination processing, the server 30 specifies the vehicle identification information of the vehicle 3 located in the neighboring region of each supply device 5 on the basis of the vehicle information (Step S27).

Then, when the power feeding termination processing to the certain vehicle 3 has already been performed in a certain supply device 5, the server 30 deletes the vehicle identification information of the vehicle 3, in which the power feeding termination processing has already been performed, from the vehicle identification information of the vehicle 3 in the neighboring region of the certain supply device 5 specified in the processing of Step S27 (Step S28).

Then, the server 30 transmits, to each supply device 5, the vehicle information associated with the vehicle identification information not deleted in the processing of Step S28 in the vehicle identification information of the vehicle 3 specified to be located in the neighboring region of each supply device 5 (Step S29).

After the vehicle information is transmitted to each supply device 5 in the processing of Step S29, when the supply device 5 receives the vehicle information from the server 30, the supply device 5 registers/deletes the vehicle identification information in/from the identification information list (Step S30). The processing in Step S30 is similar to the processing in Step S14 in FIG. 7. Then, the supply device 5 transmits the vehicle identification information registered in the identification information list to the server 30 (Step S31). The processing in Step S31 is similar to the processing in Step S15 in FIG. 7.

Then, when receiving the vehicle identification information from the supply device 5, the server 30 transmits the list registration notification to the vehicle 3 corresponding to the vehicle identification information registered in the identification information list (Step S32). The processing in Step S32 is similar to the processing in Step S16 in FIG. 7.

As a result, in a case where the processing illustrated in FIG. 8 is performed, the vehicle identification information of the vehicle 3 which is located in the neighboring region of each supply device 5, the power feeding from the supply device 5 not being terminated, and a deletion request for the vehicle identification information of which is not made is registered in the identification information list. In a case where the vehicle identification information of the vehicle 3 is registered in the identification information list of any of the supply equipment 2, the vehicle 3 receives the list registration notification. Thus, the vehicle ECU 330 can determine that the own vehicle is registered in any of the supply devices 5 by receiving the list registration notification. Then, in a case where the vehicle 3 goes out of the neighboring region of the supply device 5, the vehicle identification information of the vehicle 3 is deleted from the identification information list of the supply device 5.

FIG. 6 is referred to again. In addition, at the termination of the power transfer A170, the power reception device 20 does not need to do anything to make the transfer power zero. The P2PS interface is kept active when the vehicle 3 is in the D-WPT lane, and the state of the power reception device 20 automatically transitions to the pairing for a power transfer from a next primary device 13. As indicated by the transition line illustrated in FIG. 6, the state transitions from the termination of the power transfer A170 to the pairing and alignment check A130. As illustrated in FIG. 6, when a predetermined transition condition is satisfied, it is possible to transition from the magnetic coupling check A140 to the pairing and alignment check A130 and transition from the execution of the power transfer A150 to the pairing and alignment check A130. The pairing may be individually performed on a plurality of the primary coils 11, or the plurality of primary coils 11 may be bundled and the pairing may be performed at a representative point.

Then, in a case where there is no D-WPT request from the vehicle ECU 330, or in a case where a series of states from setting communication and requesting for the D-WPT service A60 to the termination of the power transfer A170 is prohibited, the D-WPT service session A70 transitions to the termination of the D-WPT service session A80 and stops the wide-area wireless communication between the first communication device 120 and the third communication device 340. For example, the D-WPT stops when a state of charge in the battery 320 is too high or when the power reception device 20 is too hot due to the continuous power transfer. Such an unnecessary D-WPT can be disabled simply by deactivation of the P2PS interface. However, by stopping the wide-area wireless communication, the power transmission ECU 110 can release a memory occupied for the vehicle 3 by terminating the established wide-area wireless communication without requiring the D-WPT.

In addition, the D-WPT service session A70 is not limited to transition in a manner of the transition line illustrated in FIG. 6. In the D-WPT service session A70, when the activity in and after the pairing and alignment check A130 terminates, in a case where a condition that the power transfer process stays in the D-WPT service session A70 is satisfied, transition is performed not to the termination of the D-WPT service session A80 but to the compatibility check and service authentication A110. For example, in a case where a predetermined transition condition is satisfied in the state of the magnetic coupling check A140, the state can transition to the compatibility check and service authentication A110.

In the present disclosure, at least each of the power transmission ECU 110, the first communication device 120, and the second communication device 130 in the management device 8 is provided with a voltage holding unit in such a manner as to be able to execute processing such as communication processing and arithmetic processing even at the time of outage due to disaster or the like or generation of abnormality. As the voltage holding unit, a smoothing capacitor, an uninterruptible power supply device, or the like capable of holding its own voltage and maintaining an operating voltage can be employed. In addition, it is possible to configure the voltage holding unit by providing a relay in which the outage is not caused in conjunction with a system short circuit. In addition, although control by the management device 8 will be described in the control described below, control by the supply device 5 may be used.

A first phenomenon caused by the outage is a stop of the power feeding and a second one is a stop of the authentication. Note that a target of the outage is outage in a component included in the side of the supply device 5. The vehicle 3 may be in a state in which communication with the management device 8 is disabled, authentication cannot be performed, or power feeding is stopped. As a situation in this case, the following three situations are conceivable with respect to a normal state.
Normal state
Normal operation: wide-area wireless communication "enable", narrow-area communication "enable", and a power feeding device "enable"
Outage state
Power feeding stop: wide-area wireless communication "enable", narrow-area communication "enable", and a power feeder "outage"
Wide-area stop: Wide-area wireless communication "outage", narrow-area communication "enable", and a power feeder "enable"
Full stop: Wide-area wireless communication "outage", narrow-area communication "outage", and a power feeder "outage"

In a case where these situations are generated, that is, in order of stoppage of when the outage or disaster is generated, the power feeder is stopped first by detection of a decrease in a system voltage or a DC link voltage. Then, a control system or a communication system in which the voltage is held by the voltage holding unit executes a stop procedure, and stops after stop processing is completed. As a result, even in a case where the outage is caused, the supply device 5 and the management device 8 can be safely stopped.

Furthermore, in the present disclosure, in a recovery from the outage in the management device 8 and the supply device 5, recovery processing is changed according to a recovery situation from the outage. For example, in a case where time from the outage to the recovery, that is, resumption time is longer than predetermined time, the processing is started in a stage in which the master power supply becomes the ON state A10 (see FIG. 6). In a case of the outage shorter than the predetermined time, the processing is started from the D-WPT service session A70 (see FIG. 6) and recovered. Note that even in a case where the abnormality determination unit 540 determines that there is abnormality, in a case where the voltage monitored by the voltage monitoring unit 541 is in a normal range, the processing may be started from the D-WPT service session A70. In a case where the processing is started from the D-WPT service session A70, the processing may be started from either one of the pairing (Pairing) and alignment check (Alignment Check) A130 or the magnetic coupling check (Magnetic Coupling Check) A140. The predetermined time can be selected from a several µs to 10 s and set. As a result, it is possible to avoid disturbance of the power control on the side of the vehicle 3 due to a sudden transfer of power.

When the vehicle 3 is located immediately above the segment 7 including the primary coil 11, that is, immediately above a charging mat at the time of the recovery from the outage, the power feeding may be started from a next vehicle 3. In this case, the power feeding may be stopped until the vehicle 3 located immediately above the segment 7 at the time of the recovery from the outage passes over the segment 7.

Specifically, as a first example, for example, in a case where the outage is caused in the power transmission ECU 110, the power transmission ECU 110 first acquires, from the first communication device 120, a list of approaching vehicles 3 (upcoming EV list) in a state of being operated by the voltage holding unit for predetermined time. In the recovery from the outage, in a case where the vehicle 3 is located immediately above the segment 7, the power feeding is started, after the vehicle 3 passes through, from the next vehicle 3. In other words, the power feeding to the vehicle 3 located immediately above the segment 7 is resumed from the segment 7 reached (faced) next. In a case where the vehicle 3 stays immediately above the segment 7 for predetermined time or more, the processing resumes from the D-WPT service session A70. When the outage time is equal to or longer than predetermined time, the processing resumes from the ON state A10 in the supply device 5. In this case, information indicating that the outage is caused may be transmitted from the supply device 5 to the vehicle 3, and the processing may resume from the ON state A40 also in the vehicle 3.

As a second example, for example, in a case where the outage is caused in the AC power supply 6 and at least one component among the segment 7, the primary device 13, and the second communication device 130 as the components, in a case where the vehicle 3 is located immediately above the segment 7 in the recovery from the outage, power feeding is started, after the vehicle 3 passes through, from the next vehicle 3. In other words, the power feeding to the vehicle 3 located immediately above the segment 7 is resumed from the segment 7 reached (faced) next. In a case where the vehicle 3 stays immediately above the segment 7 for the predetermined time or more, the processing resumes from the D-WPT service session A70. When the outage time is equal to or longer than the predetermined time, the processing resumes from the ON state A10 in the supply device 5. In this case, information indicating that the outage is caused may be transmitted from the supply device 5 to the vehicle 3, and the processing may resume from the ON state A40 also in the vehicle 3.

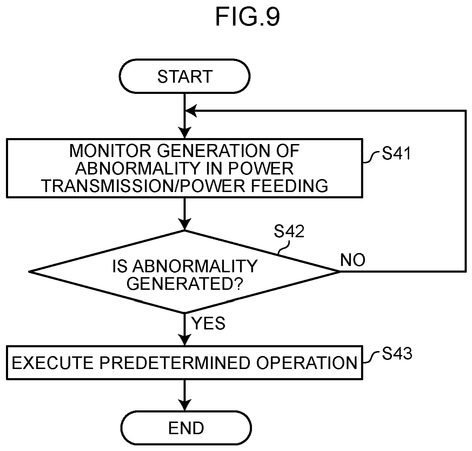

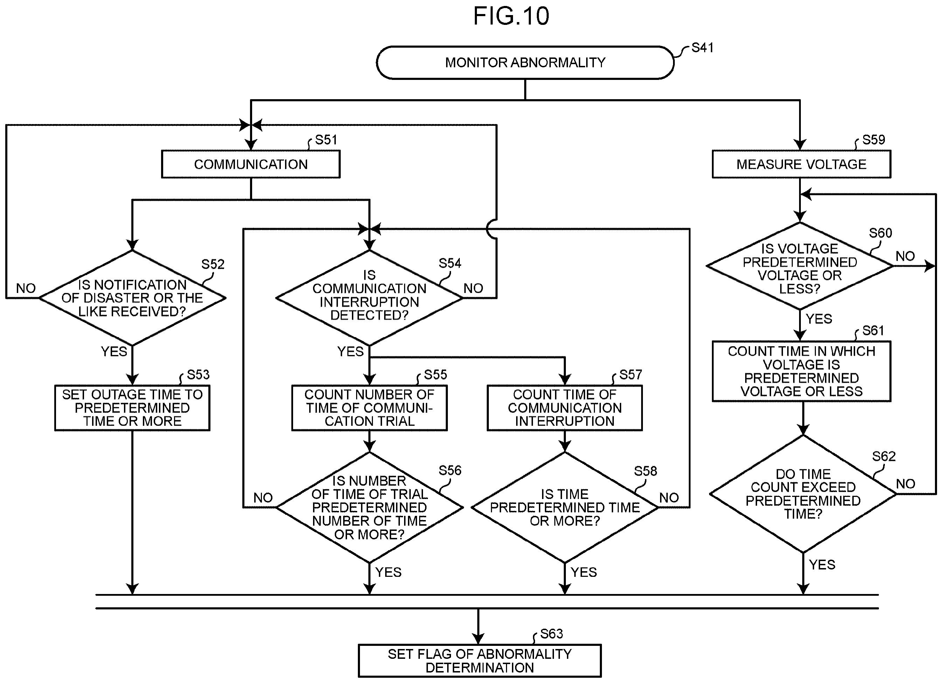

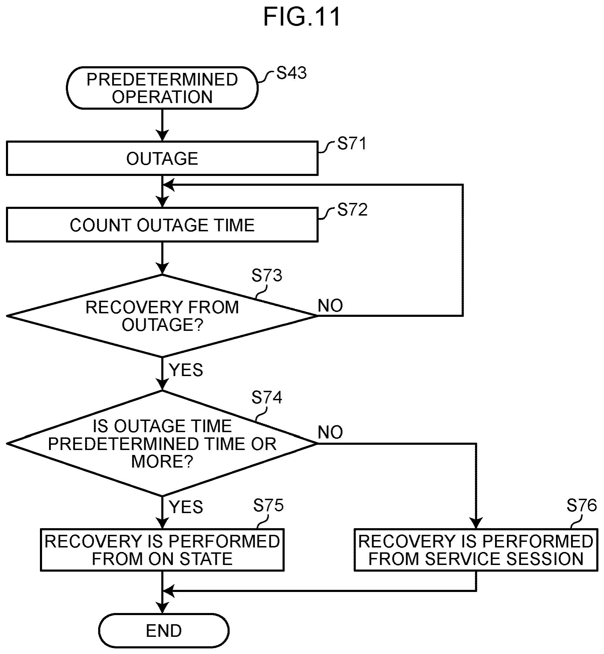

FIG. 9 is a flowchart illustrating an example of control of detecting abnormality in the wireless power transfer system. FIG. 10 is a flowchart for describing an example of a monitoring method for detecting the abnormality. FIG. 11 is a flowchart for describing predetermined processing. In the flowchart, a first example of control of determining consistency by comparing information of the wide-area wireless communication with information of the narrow-area wireless communication is illustrated.

As illustrated in FIG. 9, the power transmission ECU 110 of the management device 8 monitors generation of the abnormality in the power transmission and power feeding in the supply device 5 with the abnormality determination unit 540 (Step S41). In a case where the abnormality determination unit 540 determines that no abnormality is generated (Step S42: No), Step S41 is continued. When the abnormality determination unit 540 determines that the abnormality is generated (Step S42: Yes), a predetermined operation is executed (Step S43).

FIG. 10 is a flowchart of abnormality monitoring in Step S41 illustrated in FIG. 9. As illustrated in FIG. 10, the supply device 5 communicates with the server 30 and the like through the first communication device 120 (Step S51). The abnormality determination unit 540 of the power transmission ECU 110 determines whether information of generation of disaster or generation of an accident such as a traffic accident affecting the supply device 5 (notification of disaster or the like) is received in the information received by the first communication device 120 (Step S52). In a case where the abnormality determination unit 540 determines that the notification of the disaster or the like is not received (Step S52: No), the wide-area wireless communication is continued. In a case where the abnormality determination unit 540 determines that the notification of the disaster or the like is received (Step S52: Yes), the clocking unit 542 of the abnormality determination unit 540 sets that the outage time is equal to or longer than the predetermined time (Step S53). The abnormality determination unit 540 sets a flag for the abnormality determination (Step S63).

Furthermore, while the communication is performed by the first communication device 120 (Step S51), the abnormality determination unit 540 determines whether an interruption of the communication is detected (Step S54). The interruption of the communication is an interruption of communication of at least one of the wide-area wireless communication or the narrow-area wireless communication, and includes an interruption in communication with the vehicle 3 or communication with the server 30. In a case where the abnormality determination unit 540 determines that the interruption of the communication is not detected (Step S54: No), the wide-area wireless communication is continued. On the other hand, in a case where the abnormality determination unit 540 determines that the interruption of the communication is detected (Step S54: Yes), a trial for the communication is performed and the number of times of trials is counted (Step S55), and time of the interruption of the communication is counted by the clocking unit 542 (Step S57). Note that Step S55 and S57 can be executed in parallel. The abnormality determination unit 540 counts the number of times of trials of the communication in at least one of the wide-area wireless communication or the narrow-area wireless communication with generation of the interruption of the communication as a trigger (Step S55). In a case where the abnormality determination unit 540 determines that the number of times of trials is equal to or larger than predetermined number of times (Step S56: Yes), a flag of the abnormality determination is set (Step S63). In a case where the abnormality determination unit 540 counts elapsed time of no response with the clocking unit 542 (Step S57) and determines that the elapsed time is equal to or longer than the predetermined time (Step S58: Yes), the flag of the abnormality determination is set (Step S63). On the other hand, in a case where the abnormality determination unit 540 determines that the number of times of trials is less than the predetermined number of times (Step S56: No), the detection of the interruption of the communication is continued. Similarly, in a case where the abnormality determination unit 540 determines that the elapsed time of no response is less than the predetermined time (Step S58: No), the detection of the interruption of the communication is continued. As a result, in a case where the interruption of the communication is for short time of about a several µs to a several seconds, it can be determined that there is no abnormality. Thus, it is possible to reduce erroneous detection of the generation of the abnormality.

In addition, the abnormality determination unit 540 monitors the voltage of each component included in the supply device 5 with the voltage monitoring unit 541 (Step S59). In a case where there is a component the voltage of which becomes equal to or lower than a predetermined voltage in the voltage of the components which voltage is monitored by the voltage monitoring unit 541 (Step S60: Yes), the clocking unit 542 starts measuring time from a time point at which the voltage monitoring unit 541 detects a decrease in the voltage of at least one of the plurality of components included in the supply device 5 (Step S61). Note that the voltage may decrease due to the outage. The abnormality determination unit 540 keeps performing Step S60 to S62 while the lapse of time measured by the clocking unit 542 is equal to or shorter than the predetermined time (Step S62: No). In a case where the abnormality determination unit 540 determines that the lapse of the time measured by the clocking unit 542 exceeds the predetermined time (Step S62: Yes), the abnormality determination unit 540 sets the flag of the abnormality determination (Step S63).

Step S52 to S53, and S63, Step S54 to S58 and S63, and Step S59 to S62 and S63 may be executed in parallel or selectively executed. In a case where the flag of the abnormality determination is set by one of these, the abnormality determination unit 540 determines in Step S42 illustrated in FIG. 9 that the abnormality is generated in the supply device 5 (Step S42: Yes). In a case where the flag of the abnormality determination is not set (Step S63 is not performed), the abnormality determination unit 540 determines that no abnormality is generated in the supply device 5 (Step S42: No).

FIG. 11 is a view illustrating a flowchart of the predetermined operation in Step S43 illustrated in FIG. 9. As illustrated in FIG. 11, first, the outage is caused by a stop of power supplied from system power or the like, or the outage is caused due to a stop of the supply device 5 on the basis of the abnormality generated in any component inside the supply device 5 (Step S71). The clocking unit 542 of the abnormality determination unit 540 starts counting the outage time (Step S72). The counting of the outage time by the clocking unit 542 is executed until the recovery from the outage (Step S73: No). Then, in a case where the recovery from the outage is performed (Step S73: Yes), the power transmission ECU 110 determines whether the outage time is equal to or longer than the predetermined time (Step S74). In a case where the outage time is equal to or longer than the predetermined time (Step S74: Yes), the supply device 5 resumes from the ON state A10 (Step S75) (see FIG. 6). On the other hand, in a case where the outage time is less than the predetermined time (Step S74: No), the supply device 5 resumes from the D-WPT service session A70 (Step S76) (see FIG. 6). Note that resuming from the D-WPT service session A70 may start with the compatibility check (Compatibility check) and service authentication (Service authentication) A110, or may start with the pairing and alignment check (Pairing/Alignment check) A130. Here, in the counting of the outage time, the outage determination time may be input to a nonvolatile memory, outage recovery time may be acquired at the time of recovery from the outage, and the outage time may be calculated in comparison with the outage determination time. In addition, when the count exceeds a threshold, predetermined time elapse determination may be input to the nonvolatile memory, and the recovery operation may be determined with reference to a determination result at the time of recovery from the outage. The power transmission ECU 110 may monitor an operating voltage of the ECU, input the predetermined time elapse determination to the nonvolatile memory in a case where the operating voltage falls below the predetermined threshold, and determine the recovery operation with reference to the determination result at the time of recovery from the outage. Note that time in the determination time and the recovery time is standard time received as a standard radio wave.

Here, in a case where the abnormality determination unit 540 determines that the abnormality is generated in the supply device 5, the power transmission ECU 110 of the supply device 5 may transmit information of the generation of the abnormality and information of a recovery method to the vehicle 3 by the first communication device 120 or the second communication device 130. The information of the recovery method is information of resumption (recovery) from the D-WPT service session A70 or resumption (recovery) from the ON state A10 (A40) (normality confirmation information) (see FIG. 6). In the vehicle 3, on the basis of the received normality confirmation information, the power reception device 20 of the vehicle 3 is resumed from the ON state A40 or the D-WPT service session A70.

Determination of the selection of the resumption process after the abnormality detection and the outage may be executed by the vehicle ECU 330 instead of the power transmission ECU 110.

### Industrial Applicability

According to the present invention, the in-travel non-contact power feeding system, the power feeding device, and the power reception device that can achieve both safety and efficiency in resuming the power transfer process after the outage by clarifying the method of resuming the road-side power feeding device after the outage in the road-side power feeding device can be provided.

### Reference Signs List

- 1: WIRELESS POWER TRANSFER SYSTEM
- 2: SUPPLY EQUIPMENT
- 3: VEHICLE
- 4: ROAD
- 5: SUPPLY DEVICE
- 6: AC POWER SUPPLY
- 10: POWER TRANSMISSION DEVICE
- 11: PRIMARY COIL
- 20: POWER RECEPTION DEVICE
- 21: SECONDARY COIL
- 540: ABNORMALITY DETERMINATION UNIT
- 541: VOLTAGE MONITORING UNIT
- 542: CLOCKING UNIT

## Claims

1. An in-travel non-contact power feeding system which supplies power from a road-side power feeding device to a traveling vehicle equipped with a vehicle-side power reception device in a non-contact manner, wherein
the road-side power supply device includes a first communication device capable of executing wide-area wireless communication with the vehicle-side power reception device, a second communication device capable of executing narrow-area wireless communication with the vehicle-side power reception device, and an abnormality determination unit that determines abnormality in the road-side power feeding device, and
the road-side power feeding device is made to execute a predetermined operation in a case where the abnormality determination unit determines generation of the abnormality.

2. The in-travel non-contact power feeding system according to claim 1, wherein
the abnormality is outage in the road-side power feeding device, and
the predetermined operation includes
resuming from the outage in the road-side power feeding device,
measuring resumption time from the outage to the resumption, and
changing a resumption process of the road-side power feeding device in a case where the resumption time is less than a predetermined time and in a case where the resumption time is the predetermined time or more.

3. The in-travel non-contact power feeding system according to claim 1, wherein
the abnormality is outage inside the road-side power feeding device, and
the predetermined operation includes
resuming from the outage in the road-side power feeding device, and
measuring resumption time from the outage to the resumption, and
resuming from a service session in a case where the resumption time is less than a predetermined time, and starting from an ON state in a case where the resumption time is the predetermined time or more.

4. The in-travel non-contact power feeding system according to claim 3, wherein
the road-side power feeding device includes a plurality of segments arranged along a road, and
in a case where a predetermined segment is present at a position facing the vehicle-side power reception device at a time point at which the road-side power feeding device resumes from the outage, power feeding is resumed from a segment the vehicle-side power reception device faces next.

5. The in-travel non-contact power feeding system according to claim 1, wherein
the abnormality determination unit determines that the abnormality is generated in a case where information of notification of an accident or a disaster is received by the wide-area wireless communication.

6. The in-travel non-contact power feeding system according to claim 1, wherein
the abnormality determination unit determines that the abnormality is generated in at least one of a case where there is no response for communication, a case where at least number of times of communication trials is predetermined number of times or more, and a case where elapsed time of no response in a communication trial is a predetermined time or more in at least one of the wide-area wireless communication or the narrow-area wireless communication.

7. The in-travel non-contact power feeding system according to claim 1, wherein
the abnormality determination unit includes a voltage monitoring unit that monitors a voltage of the road-side power feeding device, and a time measurement unit that measures elapsed time,
the time measurement unit starts measuring time from a time point at which the voltage monitoring unit detects a decrease in a voltage of at least one component of a plurality of components included in the road-side power feeding device, and
the abnormality determination unit determines that the abnormality is generated in a case where the elapsed time is a predetermined time or more.

8. The in-travel non-contact power feeding system according to claim 1, wherein
the abnormality determination unit executes determination of the abnormality by using at least one abnormality determination element selected from
an abnormality determination element of a case where information of notification of an accident or a disaster is received by the wide area wireless communication,
an abnormality determination element of at least one of a case where there is no response for communication, a case where at least number of times of communication trials is a predetermined number of times or more, or a case where elapsed time of no response in a communication trial is a predetermined time or more in at least one of the wide-area wireless communication or the narrow-area wireless communication, or
an abnormality determination element of a case where the abnormality determination unit includes a voltage monitoring unit that monitors a voltage of the road-side power feeding device, and a time measurement unit that measures elapsed time, the time measurement unit starts measuring time from a time point at which the voltage monitoring unit detects a decrease in a voltage of at least one component among a plurality of components included in the road-side power feeding device, and the elapsed time is predetermined time or more.

9. The in-travel non-contact power feeding system according to claim 1, wherein
in a case where the abnormality determination unit determines that there is the abnormality, as the predetermined operation, power feeding by a power feeding device is stopped and then recovery is performed from an ON state.

10. The in-travel non-contact power feeding system according to claim 1, wherein
when the abnormality determination unit determines that there is the abnormality, as the predetermined operation, a voltage of the road-side power feeding device is monitored, and recovery is performed from a service session in a case where the voltage is within a normal range.

11. The in-travel non-contact power feeding system according to claim 1, wherein
the vehicle-side power reception device includes a third communication device to perform the wide-area wireless communication with the road-side power feeding device, and a fourth communication device to perform the narrow-area wireless communication with the road-side power feeding device, and
the road-side power feeding device transmits information of generation of the abnormality to the vehicle-side power reception device by the wide-area wireless communication or the narrow-area wireless communication as the predetermined operation in a case where the abnormality determination unit determines that there is the abnormality.

12. The in-travel non-contact power feeding system according to claim 11, wherein
in a case where the abnormality determination unit determines that there is the abnormality, as the predetermined operation, the road-side power feeding device causes the outage of the road-side power feeding device and transmits normality confirmation information including information with which recovery is performed from an ON state or a service session to the vehicle-side power reception device by the wide-area wireless communication or the narrow-area wireless communication.

13. The in-travel non-contact power feeding system according to claim 12, wherein
in a case of receiving the normality check information, the vehicle-side power reception device resumes the vehicle-side power reception device from the ON state or the service session on a basis of the normality confirmation information.

14. A power feeding device that supplies power to a traveling vehicle equipped with a vehicle-side power reception device in a non-contact manner,
the power feeding device comprising:
a first communication device capable of executing wide-area wireless communication with the vehicle-side power reception device; a second communication device capable of executing narrow-area wireless communication with the vehicle-side power reception device; and an abnormality determination unit that determines abnormality, wherein
a predetermined operation is executed in a case where the abnormality determination unit determines generation of the abnormality.

15. A power reception device that can be mounted on a vehicle,
the power reception device being configured to
be able to receive power from a road-side power feeding device in a non-contact manner while the vehicle is traveling, wherein
the road-side power feeding device includes a first communication device capable of executing wide-area wireless communication with the power reception device, a second communication device capable of executing narrow-area wireless communication with the power reception device, and an abnormality determination unit that determines abnormality in the road-side power feeding device, and is configured to execute a predetermined operation in a case where the abnormality determination unit determines generation of the abnormality.
